# EUROPÄISCHE PATENTSCHRIFT

(11) **EP 1 626 383 B1**
(45) Veröffentlichungstag und Bekanntmachung des Hinweises auf die Patenterteilung: **09.09.2009**
(21) Anmeldenummer: 05016633.9
(22) Anmeldetag: 30.07.2005
(51) Int. Cl.: G08G 1/16, B60Q 1/48, F16H 61/02

(54) **Verfahren und Vorrichtung zur Unterstützung des Rangierens eines Kraftfahrzeuges**
Method and device for supporting the ranging in a vehicle
Procédé et appareil d'appui de la mesure de distance pour véhicule

(30) Priorität: 14.08.2004 DE 102004039501
(43) Veröffentlichungstag der Anmeldung: 15.02.2006
(73) Patentinhaber: LuK Lamellen und Kupplungsbau Beteiligungs KG, 77815 Bühl (DE)
(72) Erfinder: Dreher, Felix, 77815 Bühl (DE)

(56) Entgegenhaltungen:
- EP-A1- 0 937 627
- DE-A1- 19 756 419
- GB-A- 2 173 331
- US-B1- 6 182 000

## Beschreibung

Die Erfindung betrifft eine Vorrichtung mit den Merkmalen gemäß dem Oberbegriff des Anspruchs 14 sowie ein Verfahren mit den Merkmalen gemäß dem Oberbegriff von Anspruch 1.

In den vergangenen Jahren haben sich automatisierte Getriebe immer mehr verbreitet, Komfort und Sicherheit werden zunehmend durch den Einsatz von Sensorik und elektronisch initiierten Eingriffen in den Fahrverlauf erhöht.

In der DE 197 56 419 A1 sind eine automatisch gesteuerte Bremse und Kupplung beschrieben, die das Einparken unterstützen. Dabei wird das fahrende Auto vor einem Hindernis automatisch abgebremst und gleichzeitig der Verbrennungsmotor ausgekuppelt. Zum Erkennen eines Hindernisses und Messen des Abstandes wird Ultraschall verwendet.

Die US 6,182,000 offenbart ein Verfahren, bei dem im Normalbetrieb eine Gangschaltung im Getriebe erfolgt, wenn ein Abstand zu einem Hindernis unterschritten wird.

Der vorliegenden Erfindung liegt nun die Aufgabe zugrunde, eine Vorrichtung und ein Verfahren vorzuschlagen, mit dem Komfort und Sicherheit beim langsamen Annähern des Fahrzeugs an Hindernisse wie dies beispielsweise beim Einparken auftritt, zu erhöhen.

Diese Aufgabe wird durch ein Verfahren mit den Merkmalen gemäß Anspruch 1 sowie durch eine Vorrichtung mit den Merkmalen gemäß Anspruch 14 gelöst.

Erfindungsgemäß wird also zunächst festgestellt, ob sich das Fahrzeug in einem Rangiermodus befindet. Ist dies der Fall, wird der Abstand zu einem potentiellen Hindernis in Fahrtrichtung ermittelt. Dazu werden Informationen, die mit der Entfernung zu einem Hindernis korreliert sind, verwendet. Insbesondere können die Daten aus einem Einpark-Hilfe-System in Anspruch genommen werden. Befindet sich ein Hindernis in Fahrtrichtung in der Nähe, d. h. wird ein Abstand zu einem Hindernis registriert, der einem vorgegebenen oder wählbaren Abstand entspricht oder wird dieser Abstand unterschritten, so wird das Kupplungsmoment reduziert, insbesondere die Kupplung geöffnet.

Grundsätzlich kann der Rangiermodus manuell oder automatisch aktiviert werden.

Eine manuelle Aktivierung des Rangiermodus kann durch das Einlegen vorgegebener Getriebestufen, insbesondere dem Ersten, Zweiten oder Rückwärtsgang und/oder durch das Vorliegen mindestens eines so genannten Eintrittskriteriums oder durch das Einlegen einer eigens zur Aktivierung des Rangiermodus vorgesehenen Rangier-Fahrstufe am Getriebebedienfeld beispielsweise mit einem Wählhebel ausgelöst werden.

Eine automatische Aktivierung des Rangiermodus kann erfolgen, wenn mindestens ein Eintrittskriterium erfüllt ist.

Ein solches Eintrittskriterium ist besonders dann gegeben, wenn die Fahrzeuggeschwindigkeit kleiner einer vorgebbaren Eintrittsgrenzgeschwindigkeit und der Fahrpedalwinkel kleiner einem vorgebbaren Eintrittsgrenzwinkel ist.

Die Aktivierung des Rangiermodus kann durch ein Austrittskriterium zurück genommen werden. Dies kann beispielsweise dann der Fall sein, wenn der Fahrpedalwinkel größer einem vorgebbaren Austrittsgrenzwinkel oder der Abstand zu einem Hindernis in Fahrtrichtung größer als ein vorgebbarer Austrittsgrenzabstand ist.

Alternativ oder kumulativ können ein oder mehrere Austrittskriterien erfüllt sein oder abgeprüft werden, z. B. kann geprüft werden, ob der Fahrpedalwinkel größer dem Austrittsgrenzwinkel und der Abstand zum Hindernis in Fahrtrichtung aber kleiner als der Austrittsgrenzabstand ist. Dieser Fall tritt auf, wenn der Fahrer noch näher an das Hindernis heranfahren, es berühren oder es sogar überfahren möchte, wie es beispielsweise bei hohem Gras der Fall sein kann.

Zwei weitere Austrittskriterien liegen vor, wenn in die Getriebestufe Neutral geschaltet wird und/oder ein Taster oder Schalter am Getriebebedienfeld betätigt wird, der eigens zur Deaktivierung des Rangiermodus existiert.

Abstandsbestimmungen zu einem stehenden Hindernis in Fahrtrichtung werden bevorzugt mittels eines bestehenden Einparkhilfesystems durchgeführt.

Bei aktiviertem Rangiermodus wird der Abstand zum Hindernis in Fahrtrichtung ständig oder in hinreichend kurzen zeitlichen Abständen gepulst erfasst.

Ist der Fahrpedalwinkel größer dem Austrittsgrenzwinkel, aber der Abstand zum Hindernis in Fahrtrichtung kleiner als der Austrittsgrenzabstand, so liegt wie oben beschrieben ein Austrittskriterium für den Rangiermodus vor. In diesem Fall kann ein anderer Fahrmodus, etwa ein so genannter Heranfahrmodus aktiviert werden, bei dem das Fahrzeug sich dem Hindernis weiter nähern kann. Im Heranfahrmodus kann das verwendete Fahrpedal verglichen mit einem Anfahrmodus mit gesteigerter Empfindlichkeit versehen sein.

Mit dem erfindungsgemäßen Verfahren und der erfindungsgemäßen Vorrichtung kann das Rangieren bzw. Einparken durch leichtes Betätigen der Bremse durch den Fahrer kontrolliert und ausgeführt werden. Das Auffahrrisiko wird verringert. Die Folgen von Fehlbedienungen im Stand können verringert werden, wie etwa das Loslassen der Bremse im Stand oder eine falsch gewählte Fahrtrichtung.

Weitere Vorteile und vorteilhafte Ausgestaltungen der Erfindung sind Gegenstand der nachfolgenden Figuren sowie deren Beschreibung.

Es zeigen im Einzelnen:
- Figur 1: schematisch eine Einparksituation,
- Figur 2: schematisch den erfindungsgemäßen Verfahrensverlauf,
- Figur 3: Fortsetzung des in Fig. 2 gezeigten schematischen Verfahrensverlaufs,
- Figur 4: schematische Darstellung der zusammenwirkenden Komponenten.

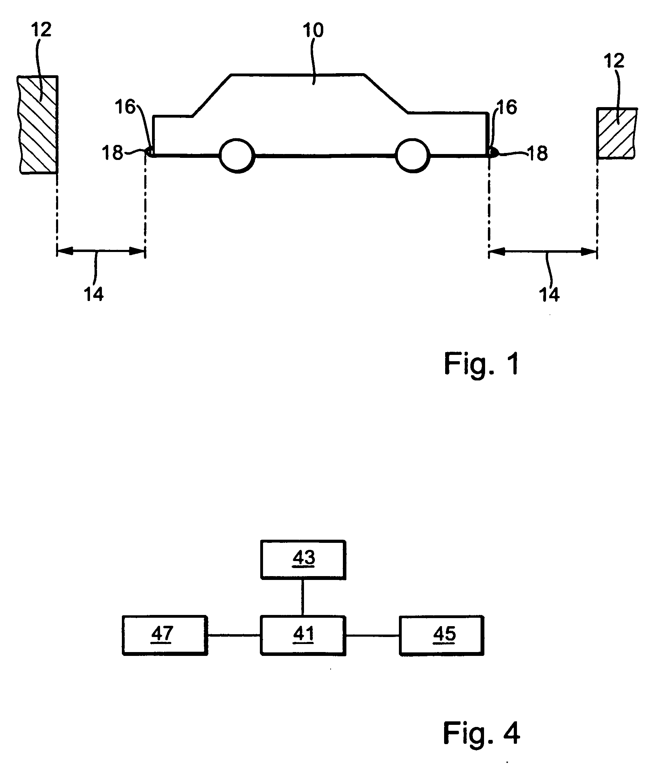

Figur 1 zeigt schematisch eine Einparksituation. Befindet sich das Fahrzeug 10 im Rangiermodus, wird der Abstand 14 des Fahrzeugs in Fahrtrichtung zu einem Hindernis 12 durch Abstandsmesssensoren 18 unter Berücksichtigung der Positionierung dieser Sensoren auf dem Fahrzeug und ihre Entfernung zum Hindernis bestimmt. Bevorzugt befinden sich die Messsensoren in den vorderen und hinteren Stossstangen 16, wie z. B. in vielen Einparkhilfesystemen. Beim Einparken muss unter Umständen mehrmals hin und her rangiert werden. Nähert sich dabei das Fahrzeug 10 einem Hindernis 12 auf eine Entfernung 14, die geringer ist als ein werkseitig vorgegebener oder vom Fahrer gewählter Abstand wird verfahrensgemäß das Kupplungsmoment reduziert oder vollkommen ausgekuppelt. Auf abschüssigem Gelände kommt der Fahrer unter Zuhilfenahme der Betriebsbremse vor dem Hindernis zum Stehen.

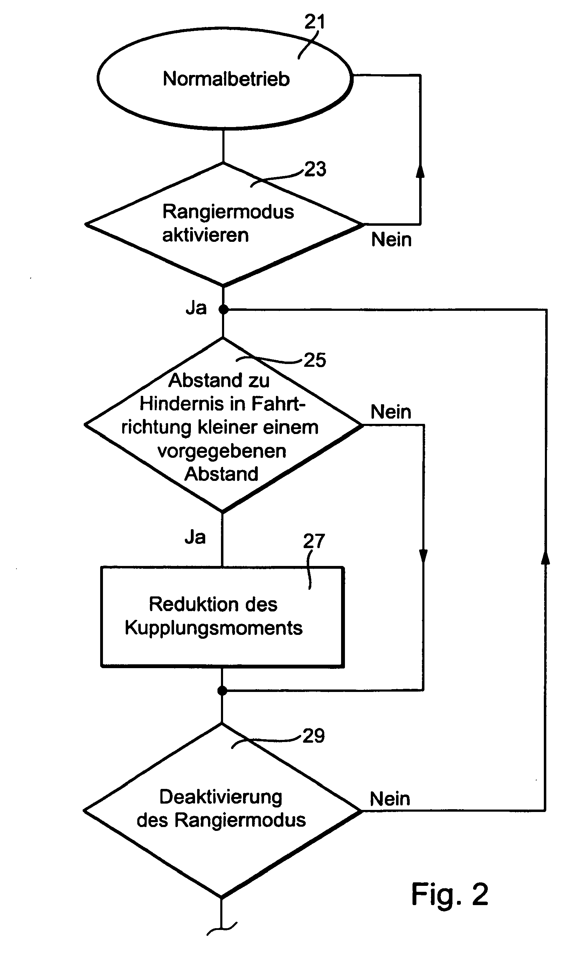

In einem Flussdiagramm gemäß Figur 2 ist zur Veranschaulichung des Rangierverfahrens der Verfahrensablauf schematisch dargestellt. Ausgehend vom Normalbetrieb 21, wie er bei Autobahn- oder Landstraßenfahrt bzw. im Stadtverkehr vorliegt, wird in einem Aktivierungsschritt 23 überprüft, ob in den Rangiermodus gewechselt werden soll. Dies erfolgt beispielsweise bei manuellem Getriebestufenwechsel in den Gängen Eins, Zwei oder Rückwärtsgang unter der optionalen Bedingung, dass sowohl die Fahrzeuggeschwindigkeit kleiner der Eintrittsgrenzgeschwindigkeit als auch der Fahrpedalwinkel kleiner dem Eintrittsgrenzwinkel ist. Alternativ wird der Rangiermodus durch Einlegen der Rangier-Fahrstufe aktiviert. Eine automatische Aktivierung des Rangiermodus erfolgt, wenn die Fahrzeuggeschwindigkeit kleiner der Eintrittsgrenzgeschwindigkeit und zugleich der Fahrpedalwinkel kleiner dem Eintrittsgrenzwinkel ist. Im Rangiermodus werden die Daten von Abstandsmesssensoren 18 verwandt, um Hindernisse in Fahrtrichtung erkennen zu können. Im Schritt 25 wird geprüft, ob ein Gegenstand als Hindernis erkannt wird und ob sein Abstand unterhalb eines werkseitig vorgegebenen oder vom Fahrer wählbaren Wertes liegt. Ist dies der Fall, so wird im Schritt 27 das Kupplungsmoment reduziert. Ist der Abstand zum Hindernis größer, wird die Abstandsmessung fortgesetzt, aber das Kupplungsmoment nicht reduziert.

Die Abstandsmessung kann dabei ständig, also kontinuierlich, periodisch oder aperiodisch, regelmäßig oder unregelmäßig gepulst erfolgen. Durch die Reduktion des Kupplungsmomentes und ggf. unter Zuhilfenahme der Fahrzeugbremse kann das Fahrzeug vor dem Hindernis zum Stehen gebracht werden. Dies kann nutzbringend beim Hin- und Herrangieren während eines Einparkvorganges angewandt werden. Vorteilhaft ist es dabei auch die Empfindlichkeit des Fahrpedals im Vergleich zum Normalbetrieb 21 zu verändern, insbesondere zu erhöhen.

In einem Deaktivierungsschritt 29 wird überprüft, ob die Aktivierung des Rangiermodus wieder zurückgenommen wird. Die Deaktivierung setzt ein, wenn der Abstand zum Hindernis 10 wieder oberhalb des Austrittsgrenzabstandes liegt oder der Fahrer eine dafür vorgesehene Steuereinheit insbesondere einen Taster betätigt oder er in die Getriebestufe Neutral schaltet oder auch der Fahrpedalwinkel oberhalb des Austrittsgrenzwinkels liegt. Liegt keines dieser Austrittskriterien vor, bleibt der Rangiermodus aktiv und die Daten der Abstandsmesssensoren werden weiterhin zur Hinderniserkennung verwandt.

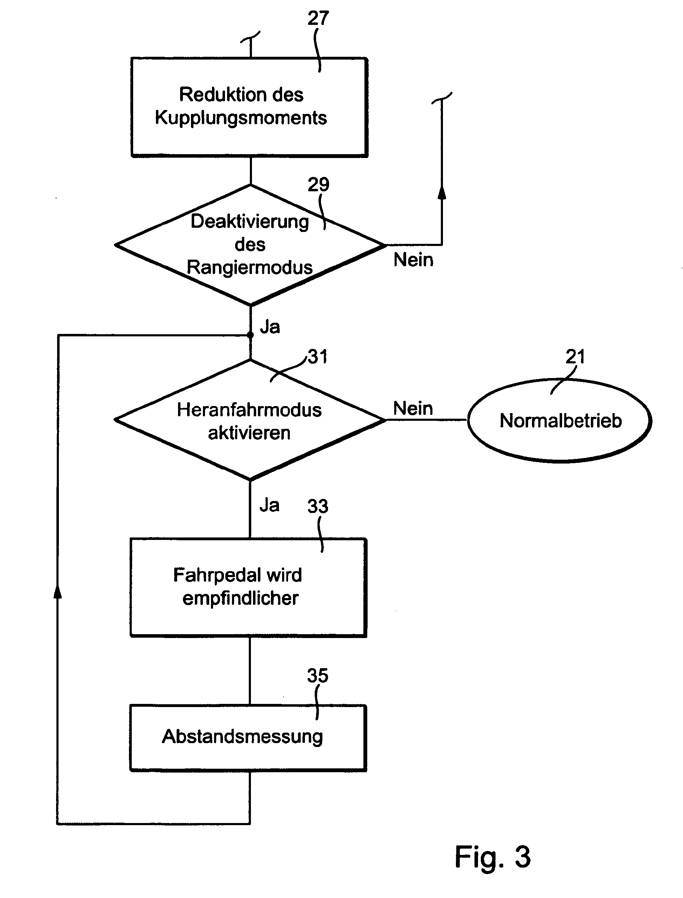

Überfahrbare Hindernisse wie etwa hohes Gras können von Abstandsmesssensoren 18 und der Steuereinrichtung 41 als Hindernis 12 erkannt werden. Gleichzeitig kann der Fahrerwunsch bestehen, es zu überfahren. Im Flussdiagramm gemäß Figur 3 ist das weitere Verfahren in einer solchen oder ähnlichen Situation schematisch dargestellt. Beim Heranfahren an das hohe Gras, das vom System als Hindernis 12 aufgefasst wird, wird unterhalb eines werkseitig vorgegebenen oder vom Fahrer wählbaren Abstands das Kupplungsmoment in Schritt 27 reduziert. Hält der Fahrer das Fahrpedal in einer Weise gedrückt, dass der Austrittsgrenzwinkel überschritten ist, wird im Deaktivierungsschritt 29 der Rangiermodus deaktiviert. Ist keine dieser Bedingungen erfüllt, bleibt der Rangiermodus weiter aktiv und der Abstand 14 zum Hindernis 12 wird weiter gemessen. Ist der Abstand 14 zum Hindernis 12 geringer als der Austrittsgrenzabstand und der Fahrpedalwinkel größer als der Austrittsgrenzwinkel, zeigt der Fahrer an, dass er sich dem Hindernis 12 weiter nähern will. Der Heranfahrmodus wird im Schritt 31 aktiviert. Dabei kann im Schritt 33 das Fahrpedal mit einer für den Heranfahrmodus typischen Empfindlichkeit ausgestattet werden, die größer ist als jene im Normalbetrieb 21. Der Fahrer kann mit dem Fahrzeug 10 an das Hindernis 12 heran und gegebenenfalls über es hinweg fahren. Der Abstand 14 zum Hindernis 12 wird im Schritt 35 weiter ermittelt. Erst wenn der Abstand zum Hindernis größer dem Austrittsgrenzabstand - wenn das Fahrzeug beispielsweise über das hohe Gras gefahren ist und danach kein weiteres Hindernis mehr von den Abstandssensoren 18 detektiert wird - oder der Fahrpedalwinkel geringer als der Austrittsgrenzwinkel ist, wird der Heranfahrmodus im Schritt 31 deaktiviert und das Fahrzeug 10 operiert wieder im Normalbetrieb 21.

Figur 4 stellt schematisiert die Vorrichtung zur Erleichterung des Rangierens 41 sowie weitere beteiligte und zusammenwirkende Fahrzeugkomponenten dar. Ist das Fahrzeug in Betrieb bestimmt die Steuereinrichtung 41 ständig, kontinuierlich, periodisch oder aperiodisch, regelmäßig oder unregelmäßig gepulst Größen, die durch die Betriebsdatenerfassungseinheit 47 geliefert werden und bestimmt im Aktivierungsschritt 23 , ob der Rangiermodus aktiviert wird oder nicht. Dazu wird abgefragt, ob der Fahrer die manuelle Schaltung der Getriebestufen oder ob er die Rangier-Fahrstufe gewählt hat, wie hoch die Fahrzeuggeschwindigkeit und wie groß der Fahrpedalwinkel ist. Eintrittsgrenzgeschwindigkeit und der Wert für den Eintrittsgrenzwinkel liegen in der Steuereinrichtung 41 und/oder der Betriebsdatenerfassungseinheit 47 vor. Im Rangiermodus liefert die Hindernismesseinrichtung 43 Abstandsinformationen über ein sich eventuell in Fahrtrichtung befindendes Hindernis 12 an die Steuereinrichtung 41, die diesen Wert mit einem vom Fahrzeug-Hersteller vorgegebenen oder vom Fahrer oder einer Service-Einrichtung gewählten Wert vergleicht. Ist der von der Hindernismesseinrichtung 43 gemessene Abstand geringer als der vorgegebene Wert, veranlasst die Steuereinrichtung eine Reduktion des Kupplungsmoments 27 durch Ansteuerung des Kupplungsaktors 45. Die Stärke der Reduzierung kann von anderen Größen wie beispielsweise dem Grad der Bremsbetätigung, der Fahrzeuggeschwindigkeit und ähnlichen Daten wie sie ebenfalls in der Betriebsdatenerfassungseinheit 47 vorliegen, abhängen. Die Betriebsdatenerfassungseinheit 47 liefert der Steuereinrichtung 41 auch hinreichend oft geeignete Daten, die es dieser im Deaktivierungsschritt 29 ermöglicht zu überprüfen, ob ein Austrittskriterium für den Rangiermodus vorliegt. Ebenso kann durch das Zusammenspiel von Betriebsdatenerfassungseinheit 47 und Steuereinrichtung 41 in Schritt 31 festgestellt werden, ob der Heranfahrmodus aktiviert oder abgeschaltet werden soll. Falls der Fahrpedalwinkel größer als der Austrittsgrenzwinkel und zugleich der Fahrzeug-Hindernis Abstand kleiner einem Austrittsabstand ist, aktiviert die Steuereinrichtung 41 den Heranfahrmodus andernfalls schaltet sie ihn ab und das Fahrzeug operiert im Normalbetrieb 21. Bei Aktivierung veranlasst die Steuereinrichtung 41, dass das Fahrpedal mit einer für den Heranfahrmodus typischen Empfindlichkeit ausgestattet wird, die größer ist als jene im Normalbetrieb 21 und dass die Abstandsmessung zum Hindernis fortgesetzt wird.

### Bezugszeichenliste

10 Kraftfahrzeug
12 Hindernis
14 Abstand des Fahrzeugs in Fahrtrichtung zu einem Hindernis
16 Stoßstangen des Fahrzeugs
18 Abstandsmesssensoren
21 Verfahrensschritt
23 Verfahrensschritt
25 Verfahrensschritt
27 Verfahrensschritt
29 Verfahrensschritt
31 Verfahrensschritt
33 Verfahrensschritt
35 Verfahrensschritt
41 Steuereinrichtung
43 Hindernismesseinrichtung zur Ermittlung des Fahrzeug-Hindernis Abstandes
45 Kupplungsaktor
47 Betriebsdatenerfassungseinheit die Größen wie Bremskraft, Fahrzeuggeschwindigkeit oder davon abgeleitete Größen enthält

## Patentansprüche

1. Verfahren zur Unterstützung des Rangierens eines Kraftfahrzeuges (10) mit einer automatisierten Kupplung zwischen einer Antriebseinheit und einem Getriebe mit einer Mehrzahl von Getriebestufen, **dadurch gekennzeichnet, dass** ein Rangiermodus aktiviert wird und in dem Rangiermodus bei Unterschreitung eines Abstands (14) des Kraftfahrzeugs (10) zu einem Hindernis (12) die Kupplung mindestens teilweise geöffnet wird.

2. Verfahren nach Anspruch 1, **dadurch gekennzeichnet, dass** der Rangiermodus in einem Aktivierungsschritt (23) manuell oder automatisch aktiviert wird.

3. Verfahren nach Anspruch 2, **dadurch gekennzeichnet, dass** der Rangiermodus im Aktivierungsschritt (23) manuell
a) durch das Einlegen einer vorgegebenen Getriebestufe, insbesondere des Ersten, Zweiten oder Rückwärtsganges und/oder
b) durch das Vorliegen mindestens eines Eintrittskriteriums oder
c) durch das Einlegen der Rangier-Fahrstufe aktiviert wird.

4. Verfahren nach einem der Ansprüche 1 bis 3, **dadurch gekennzeichnet, dass** der Rangiermodus in einem Aktivierungsschritt (23) automatisch aktiviert wird, wenn mindestens ein Eintrittskriterium erfüllt ist.

5. Verfahren nach Anspruch 3 und 4, **dadurch gekennzeichnet, dass** im Aktivierungsschritt (23) als Eintrittskriterium geprüft wird, ob die Fahrzeuggeschwindigkeit kleiner einer Eintrittsgrenzgeschwindigkeit und der Fahrpedalwinkel kleiner einem Eintrittsgrenzwinkel ist.

6. Verfahren nach einem der Ansprüche 1 bis 5, **dadurch gekennzeichnet, dass** die Aktivierung des Rangiermodus durch ein Austrittskriterium in einem Deaktivierungsschritt (29) zurückgenommen wird.

7. Verfahren nach Anspruch 6, **dadurch gekennzeichnet, dass** im Deaktivierungsschritt (29) als Austrittskriterium geprüft wird, ob
a) der Fahrpedalwinkel größer einem vorgebbaren Austrittsgrenzwinkel und/oder
b) der Abstand zum Hindernis in Fahrtrichtung größer als der Austrittsgrenzabstand ist und/oder
c) die Getriebestufe Neutral geschaltet wird und/oder
d) ein Steuerelement, insbesondere ein Taster am Getriebebedienfeld betätigt wird.

8. Verfahren nach einem der Ansprüche 1 bis 7, **dadurch gekennzeichnet, dass** der Abstand (14) zu dem Hindernis (12) in Fahrtrichtung mittels eines Einparkhilfe-Systems erfasst wird.

9. Verfahren nach einem der Ansprüche 1 bis 8, **dadurch gekennzeichnet, dass**, die Abstandsinformationen (14) über das Hindernis (10) in Fahrtrichtung ständig erfasst werden.

10. Verfahren nach einem der Ansprüche 1 bis 8, **dadurch gekennzeichnet, dass** die Abstandsinformationen (14) gepulst erfasst werden.

11. Verfahren nach einem der Ansprüche 1 bis 10, **dadurch gekennzeichnet, dass** bei aktiviertem Rangiermodus das maximal erlaubte Kupplungsmoment insbesondere in Abhängigkeit von mindestens einer der folgenden Größen bestimmt wird:
a) Ausmaß der Betätigung einer Betriebsbremse
b) Abstand (14) zum Hindernis (12)
c) Fahrzeuggeschwindigkeit oder einem entsprechenden oder einem von diesen aufgezählten Größen abgeleiteten Wert.

12. Verfahren nach einem der Ansprüche 1 bis 11, **dadurch gekennzeichnet, dass** im Falle, dass der Fahrpedalwinkel größer dem Austrittsgrenzwinkel aber der Abstand zum Hindernis in Fahrtrichtung kleiner als der Austrittsgrenzabstand ist, ein Heranfahrmodus aktiviert wird mit dem das Fahrzeug (10) an das Hindernis (12) heranfahren, es berühren und es auch überfahren kann.

13. Verfahren nach Anspruch 12, **dadurch gekennzeichnet, dass** die Empfindlichkeit eines zur Steuerung der Antriebseinheit verwendeten Fahrpedals im Rangier- und/oder Heranfahrmodus geändert, insbesondere erhöht wird.

14. Vorrichtung zur Unterstützung des Rangierens eines Kraftfahrzeuges mit einer automatisierten Kupplung zwischen einer Antriebseinheit und einem Getriebe mit einer Mehrzahl von Getriebestufen **dadurch gekennzeichnet, dass** eine Hindernismesseinrichtung (43) zur Messung eines Abstandes (14) zu einem Hindernis (12) und eine Steuereinrichtung (41) vorgesehen sind, wobei mit der Steuereinrichtung (41) ein Kupplungsaktor (45) bei Unterschreitung eines Abstands des Kraftfahrzeugs (10) zu einem Hindernis (12) die Kupplung mindestens teilweise öffnet.

15. Vorrichtung nach Anspruch 14, **dadurch gekennzeichnet, dass** durch die Steuereinrichtung (41) ein Rangiermodus aktivierbar ist.

16. Vorrichtung nach einem der Ansprüche 14 oder 15, **dadurch gekennzeichnet, dass** die Hindernismesseinrichtung (43) so ausgeführt ist, dass die Abstandsinformation (14) zwischen Sensor (18) und Hindernis (12) ständig oder gepulst ermittelbar ist.

17. Vorrichtung nach einem der Ansprüche 14 bis 16, **dadurch gekennzeichnet, dass** durch die Steuereinrichtung ein Heranfahrmodus aktivierbar ist.

18. Vorrichtung nach einem der Ansprüche 14 bis 17, **dadurch gekennzeichnet, dass** durch die Steuereinrichtung die Empfindlichkeit eines zur Bedienung der Antriebseinheit verwendeten Fahrpedals änderbar, insbesondere erhöhbar ist.

## Claims

1. Method for assisting the manoeuvring of a motor vehicle (10) having an automated clutch between a drive unit and a gearbox with a plurality of gearbox stages, **characterized in that** a manoeuvring mode is activated, and in the manoeuvring mode the clutch is at least partially opened when a distance (14) of the motor vehicle (10) from an obstacle (12) is undershot.

2. Method according to Claim 1, **characterized in that** the manoeuvring mode is activated manually or automatically in an activation step (23).

3. Method according to Claim 2, **characterized in that** the manoeuvring mode is activated manually in the activation step (23)
a) by engaging a predefined gearbox stage, in particular the first, second or reverse gear speed and/or
b) through the presence of at least one entry criterion or
c) by engaging the manoeuvring driving position.

4. Method according to one of Claims 1 to 3, **characterized in that** the manoeuvring mode is activated automatically in an activation step (23) if at least one entry criterion is met.

5. Method according to Claims 3 and 4, **characterized in that** in the activation step (23) it is checked, as an entry criterion, whether the velocity of the vehicle is lower than an entry limiting velocity and the accelerator pedal angle is less than an entry limiting angle.

6. Method according to one of Claims 1 to 5, **characterized in that** the activation of the manoeuvring mode is cancelled by an exit criterion in a deactivation step (29).

7. Method according to Claim 6, **characterized in that** in the deactivation step (29) it is checked, as an exit criterion, whether
a) the accelerator pedal angle is greater than a predefineable exit limiting angle and/or
b) the distance from the obstacle in the direction of travel is greater than the exit limiting distance and/or
c) the gearbox stage is shifted to neutral and/or
d) a control element, in particular a momentary contact switch, on the gearbox operator control panel is actuated.

8. Method according to one of Claims 1 to 7, **characterized in that** the distance (14) from the obstacle (12) in the direction of travel is sensed by means of a parking aid system.

9. Method according to one of Claims 1 to 8, **characterized in that** the distance information (14) is sensed continuously in the direction of travel by means of the obstacle (10).

10. Method according to one of Claims 1 to 8, **characterized in that** the distance information (14) is sensed in a pulsed fashion.

11. Method according to one of Claims 1 to 10, **characterized in that**, when the manoeuvring mode is activated, the maximum permitted clutch torque is determined, in particular as a function of at least one of the following variables:
a) degree of actuation of a service brake,
b) distance (14) from the obstacle (12),
c) velocity of the vehicle or a corresponding value or a value which is derived from these enumerated variables.

12. Method according to one of Claims 1 to 11, **characterized in that** if the accelerator pedal angle is greater than the exit limiting angle but the distance from the obstacle in the direction of travel is less than the exit limiting distance an approach mode is activated with which the vehicle (10) can approach the obstacle (12), make contact with it and also travel over it.

13. Method according to Claim 12, **characterized in that** the sensitivity of an accelerator pedal which is used to control the drive unit is changed, in particular increased, in the manoeuvring mode and/or approach mode.

14. Device for assisting the manoeuvring of a motor vehicle having an automated clutch between a drive unit and a gearbox with a plurality of gearbox stages, **characterized in that** an obstacle-measuring device (43) for measuring a distance (14) from an obstacle (12), and a control device (41) are provided, wherein with the control device (41) a clutch actuator (45) opens the clutch at least partially when a distance of the motor vehicle (10) from an obstacle (12) is undershot.

15. Device according to Claim 14, **characterized in that** a manoeuvring mode can be activated by means of the control device (41).

16. Device according to one of Claims 14 or 15, **characterized in that** the obstacle-measuring device (43) is embodied in such a way that the distance information (14) between the sensor (18) and obstacle (12) can be determined continuously or in a pulsed fashion.

17. Device according to one of Claims 14 to 16, **characterized in that** an approach mode can be activated by means of the control device.

18. Device according to one of Claims 14 to 17, **characterized in that** the sensitivity of an accelerator pedal which is used to control the drive unit can be changed, in particular increased, by means of the control device.

## Revendications

1. Procédé d'assistance aux manoeuvres d'un véhicule automobile (10) comprenant un embrayage automatisé entre une unité d'entraînement et une boîte de vitesses avec une pluralité d'étages de transmission, **caractérisé en ce qu'**un mode de manoeuvre est activé et dans le mode de manoeuvre, en dessous d'une certaine distance (14) entre le véhicule automobile (10) et un obstacle (12), l'embrayage est au moins partiellement ouvert.

2. Procédé selon la revendication 1, **caractérisé en ce que** le mode de manoeuvre est activé manuellement ou automatiquement dans une étape d'activation (23).

3. Procédé selon la revendication 2, **caractérisé en ce que** le mode de manoeuvre est activé manuellement dans l'étape d'activation (23) :
a) par l'enclenchement d'un étage de transmission prédéfini, notamment la première ou la deuxième vitesse ou bien la vitesse de marche arrière, et/ou
b) par la présence d'au moins un critère d'entrée, ou
c) par l'enclenchement d'un étage de conduite en manoeuvre.

4. Procédé selon l'une quelconque des revendications 1 à 3, **caractérisé en ce que** le mode de manoeuvre est activé automatiquement dans une étape d'activation (23) lorsqu'au moins un critère d'entrée est satisfait.

5. Procédé selon les revendications 3 et 4, **caractérisé en ce que** dans l'étape d'activation (23), on vérifie comme critère d'entrée si la vitesse du véhicule est inférieure à une vitesse limite d'entrée et si l'angle de la pédale d'accélérateur est inférieur à un angle limite d'entrée.

6. Procédé selon l'une quelconque des revendications 1 à 5, **caractérisé en ce que** l'activation du mode de manoeuvre section transversale est rétractée en une étape de désactivation (29) par un critère de sortie.

7. Procédé selon la revendication 6, **caractérisé en ce que** l'on vérifie, dans l'étape de désactivation (29), en tant que critère de sortie, si :
a) l'angle de la pédale d'accélérateur est supérieur à un angle limite de sortie prédéfinissable, et/ou
b) si la distance à l'obstacle dans la direction de conduite est supérieure à la distance limite de sortie et/ou
c) si l'étage de transmission est neutre et/ou
d) si un élément de commande, notamment un palpeur sur le champ de commande de la boîte de vitesses, est activé.

8. Procédé selon l'une quelconque des revendications 1 à 7, **caractérisé en ce que** la distance (14) à l'obstacle (12) est détectée dans la direction de conduite au moyen d'un système d'aide au stationnement.

9. Procédé selon l'une quelconque des revendications 1 à 8, **caractérisé en ce que** les informations de distance (14) concernant l'obstacle (10) dans la direction de conduite sont détectées en continu.

10. Procédé selon l'une quelconque des revendications 1 à 8, **caractérisé en ce que** les informations de distance (14) sont détectées de manière pulsée.

11. Procédé selon l'une quelconque des revendications 1 à 10, **caractérisé en ce que** lorsque le mode de manoeuvre est activé, le couple d'embrayage maximal autorisé est déterminé notamment en fonction d'au moins l'une des grandeurs suivantes :
a) amplitude de l'actionnement d'un frein de service
b) distance (14) à l'obstacle (12)
c) vitesse du véhicule ou valeur correspondante ou dérivée de ces valeurs calculées.

12. Procédé selon l'une quelconque des revendications 1 à 11, **caractérisé en ce que** dans le cas où l'angle de pédale d'accélérateur est supérieur à l'angle limite de sortie mais que la distance à l'obstacle dans la direction de conduite est inférieure à la distance limite de sortie, un mode d'approche est activé, avec lequel le véhicule (10) peut s'approcher de l'obstacle (12), venir en contact avec lui, et même rouler par-dessus.

13. Procédé selon la revendication 12, **caractérisé en ce que** la sensibilité d'une pédale d'accélérateur utilisée pour la commande de l'unité d'entraînement est modifiée dans le mode de manoeuvre et/ou de rapprochement, notamment est accrue.

14. Dispositif d'assistance aux manoeuvres d'un véhicule automobile comprenant un embrayage automatisé entre une unité d'entraînement et une boîte de vitesses avec une pluralité d'étages de transmission, **caractérisé en ce qu'**un dispositif de mesure d'obstacle (43) pour mesurer une distance (14) à un obstacle (12) et un dispositif de commande (41) sont prévus, le dispositif de commande (41) permettant à un actionneur d'embrayage (45), en dessous d'une certaine distance entre le véhicule automobile (10) et un obstacle (12), d'ouvrir au moins partiellement l'embrayage.

15. Dispositif selon la revendication 14, **caractérisé en ce qu'**un mode de manoeuvre peut être activé par le dispositif de commande (41).

16. Dispositif selon l'une quelconque des revendications 14 ou 15, **caractérisé en ce que** le dispositif de mesure d'obstacles (43) est réalisé de telle sorte que les informations de distance (14) entre le capteur (18) et l'obstacle (12) puissent être détectées constamment ou de manière pulsée.

17. Dispositif selon l'une quelconque des revendications 14 à 16, **caractérisé en ce qu'**un mode d'approche peut être activé par le dispositif de commande.

18. Dispositif selon l'une quelconque des revendications 14 à 17, **caractérisé en ce que** le dispositif de commande permet de modifier, notamment d'augmenter, la sensibilité d'une pédale d'accélérateur utilisée pour commander l'unité d'entraînement.
